(19)

**Europäisches Patentamt**
**European Patent Office**
**Office européen des brevets**

(11) **EP 4 446 896 B1**

(12) **EUROPEAN PATENT SPECIFICATION**

(45) Date of publication and mention
of the grant of the patent:
**24.12.2025 Bulletin 2025/52**

(21) Application number: **24196485.7**

(22) Date of filing: **14.09.2020**

(51) International Patent Classification (IPC):
*G06F 15/173* (2006.01)   *G06F 9/52* (2006.01)
*G06F 9/54* (2006.01)   *G06N 3/063* (2023.01)
*G06F 1/04* (2006.01)   *G06F 1/10* (2006.01)
*G06F 1/12* (2006.01)   *G06F 11/362* (2025.01)
*G06F 11/36* (2025.01)

(52) Cooperative Patent Classification (CPC):
**G06F 15/17325; G06F 1/04; G06F 1/10; G06F 1/12;**
**G06F 9/52; G06F 9/546; G06N 3/063;**
G06F 11/3648

(54) **MESSAGE BASED PROCESSING SYSTEM AND METHOD OF OPERATING THE SAME**

NACHRICHTENBASIERTES VERARBEITUNGSSYSTEM UND VERFAHREN ZUM BETRIEB
DAVON

SYSTÈME DE TRAITEMENT BASÉ SUR DES MESSAGES ET SON PROCÉDÉ DE
FONCTIONNEMENT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.09.2019 EP 19196976**

(43) Date of publication of application:
**16.10.2024 Bulletin 2024/42**

(62) Document number(s) of the earlier application(s) in
accordance with Art. 76 EPC:
**20768618.9 / 4 028 899**

(73) Proprietor: **Snap Inc.**
**Santa Monica, CA 90405 (US)**

(72) Inventors:
• **KIEVITS, Peter**
  **5656 AG Eindhoven (NL)**
• **ZWARTENKOT, Rik-Jan**
  **5656 AG Eindhoven (NL)**
• **AHMED, Syed Zahid**
  **75012 Paris (FR)**

(74) Representative: **V.O.**
**P.O. Box 87930**
**2508 DH Den Haag (NL)**

(56) References cited:
**US-A1- 2013 241 595   US-A1- 2016 224 502**

**Description**

BACKGROUND

The present invention pertains to a message based processing system that comprises a plurality of clock-driven processing clusters each of which comprises a plurality of processing cluster elements. The present invention further pertains to a method of operating the same. The processing cluster elements are capable to mutually exchange messages.

In one example processing cluster elements may be provided as neuromorphic processing cluster elements. Neuromorphic processing cluster elements mimic behavior of biological neurons in that they have a neuromorphic state dependent on received messages. Additionally, their neuromorphic state may change autonomously in time, e.g. to simulate a leakage process. Neuromorphic processing elements may transmit event-messages indicative for their neuromorphic state to other processing cluster elements. In another example processing cluster elements may be provided as arithmetical/logical processing cluster elements that perform arithmetical/logical operations on input data conveyed by received arithmetical/logical data messages and upon completion transmit the result as arithmetical/logical data messages to other processing cluster elements. It is noted that neuromorphic processing cluster elements may transmit messages to neuromorphic processing cluster elements as well as arithmetical/logical processing cluster elements. Similarly arithmetical/logical processing cluster elements may transmit messages to neuromorphic processing cluster elements as well as arithmetical/logical processing cluster elements.

The mutual cooperation of processing clusters may be fully determined by the messages exchanged by their processing cluster elements. The processing clusters need a number of internal clock cycles to process their pending event messages. There is a need to provide measures that enable additional system control in particular during specific circumstances, e.g. when testing or debugging. In other circumstances it may be desired that processing clusters can operate in their own pace without being dependent on the operation of other processing clusters.

Reference is made to US2016/224502, which pertains to synchronization in a computing system with multi-core processing devices. Therein events and/or signals are used to indicate whether certain buffers (or other system components) are idle. New tasks may be assigned to individual processing elements once they are deemed idle by virtue of certain buffers or components being idle.

SUMMARY

It is an object to provide an improved message-based processing system that enables a flexible synchronization of its processing clusters. It is a further object to provide an improved method of operating such a processing system.

These objects are achieved with the message-based processing system as defined in claim 1 and with the method of claim 14.

The processing synchronization hierarchy provided in the improved message-based processing system allows a mix of different processing schemes allowing either groups of processing clusters to be mutually (coarsely) synchronized or allowing one, more or all processing clusters to run independently. On the one hand the direct control of processing clusters by their associated cluster level synchronization controller minimizes control delays in particular if the processor clusters are to operate independently from one another at a high speed. On the other hand, the fact that the cluster level synchronization controllers are part of a processing synchronization hierarchy with at least one main level synchronization controller system allows for a mix of different processing schemes such as an operation mode wherein two more or all processing clusters are mutually synchronized.

The mutual synchronization is of a coarse nature, in that the synchronized processing clusters are allowed to process their queued event-messages at their own pace, provided that event-message processing is initiated by the trigger signal from their cluster level synchronization controller and that the cluster level synchronization controller receives a processing ready signal upon completion of said processing. In particular in larger processing systems one or more intermediate level synchronization controllers may be provided to allow the main level synchronization controller to indirectly control the cluster level synchronization controllers.

The selection of the operational mode of the main level synchronization controller and the corresponding configuration of the cluster level synchronization controller and optional intermediate cluster level synchronization controllers may be specified by control registers provided in the synchronization controller. Therewith host software can easily configure synchronization hierarchy to meet specific needs.

Also processing clusters may have one or more control registers accessible by host software to configure a breakpoint detection module to detect one of a message directed to a predetermined processing cluster element, for example a particular arithmetic condition, an exceptions, and an overflow condition.

BRIEF DESCRIPTION OF THE DRAWINGS

These and other aspects are disclosed in more detail with reference to the drawings. Therein:

FIG. 1A, 1B and 1C schematically show various operational modes of an embodiment of a message-based processing system as provided herein,
FIG. 2 shows a first embodiment of a processing cluster,
FIG. 3 shows a second embodiment of a processing cluster,
FIG. 4 schematically shows an operation of a processing cluster,
FIG. 5 shows an operation of the synchronization controller hierarchy
FIG. 6A, shows aspects of a cluster level synchronization controller,
FIG. 6B shows aspects of an intermediate level synchronization controller,
FIG. 6C shows aspects of a main level synchronization controller,
FIG. 7A, 7B shows examples of a temporal load distribution involved in a typical application.

DETAILED DESCRIPTION OF EMBODIMENTS

In this application corresponding elements are dented with corresponding reference numbers unless otherwise stated.

The wording "associated" herein has the following meaning. The associated processing clusters of a cluster level synchronization controller are the processing clusters under control of that cluster level synchronization controller, i.e. the processing clusters that receive their trigger signal from that cluster level synchronization controller. Vice versa, the associated cluster level synchronization controller of a clock-driven processing cluster is the cluster level synchronization controller by which it is controlled. Similarly a higher level synchronization controller is associated with the lower level synchronization controller under its control and a lower level synchronization controller is associated with higher level synchronization controller by which it is controlled. An indirect association exists as a combination of two or more associations in the same hierarchical direction. For example the main level synchronization controller is directly associated with all intermediate level synchronization controllers under its control, and indirectly associated with all cluster level synchronization controllers associated with its associated intermediate level synchronization controllers. Still further it is indirectly associated with all clock-driven processing clusters associated with the cluster level synchronization controllers with which it is indirectly associated. The association as well as the indirect association is bidirectional.

In the description below, reference numeral 3000 is used to refer to a cluster level synchronization controller in general. Reference numerals 3000a, 3000b, 3000c and 3000d are used to refer to a particular one of the cluster level synchronization controllers 3000. Reference numeral 300 is used to refer to an intermediate level synchronization controller. Reference numerals 300a, 300b, are used to refer to a particular one of the intermediate level synchronization controllers 300.

A processing ready signal is indicated as Rd in general and may be further specified as $Rd_{jk}$, wherein j indicates the level that generates the ready signal and k indicates a specific element at that level. A processing ready signal from a specific set of processing clusters is indicated as $Rd_J$, wherein J denotes a specific one of those sets.

Similarly trigger signal is generally indicated as Tr and may be further specified as $Tr_{jk}$, wherein j indicates the level that generates the trigger signal and k indicates a specific element to which the trigger signal is directed. A trigger signal from the host processor is indicated as $Tr_h$.

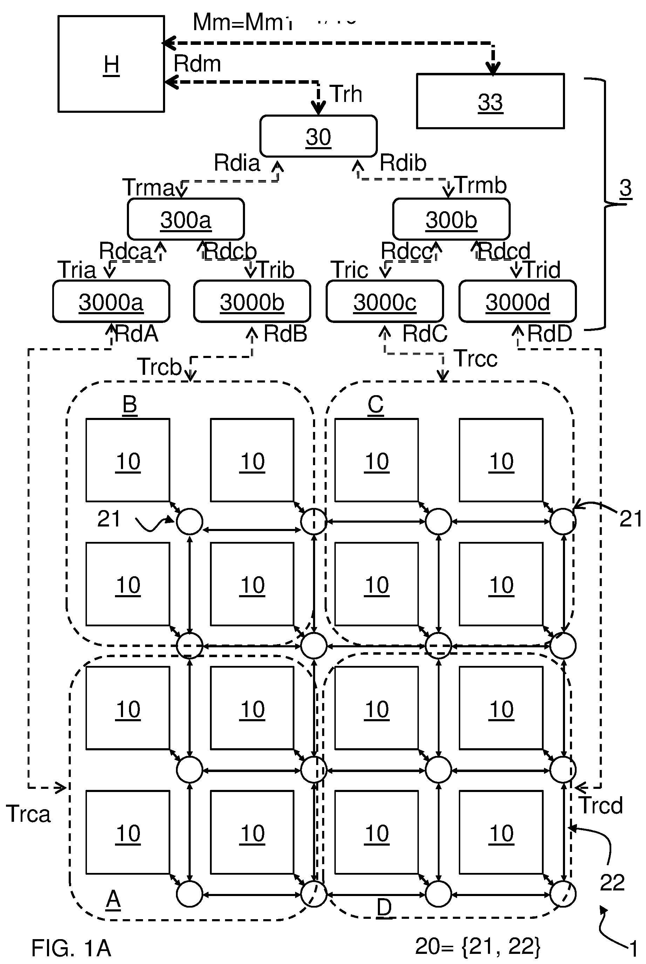

FIG. 1A schematically shows a message-based processing system 1 comprising a plurality of clock-driven processing clusters 10, a message exchange network 20, having network nodes 21 and network interconnections 22 and a processing synchronization hierarchy 3.

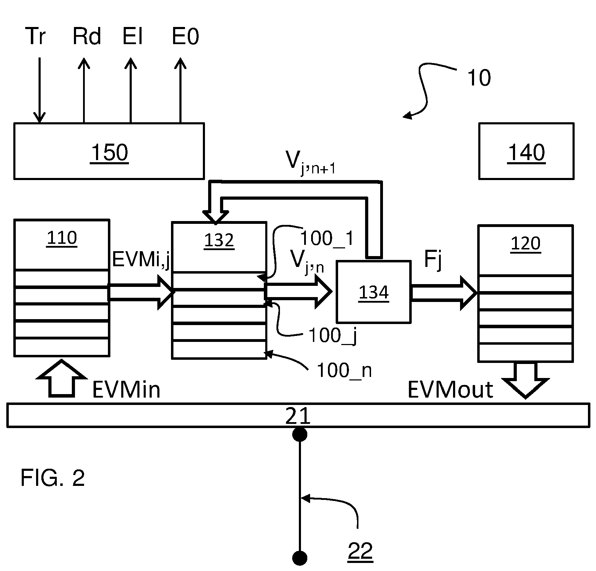

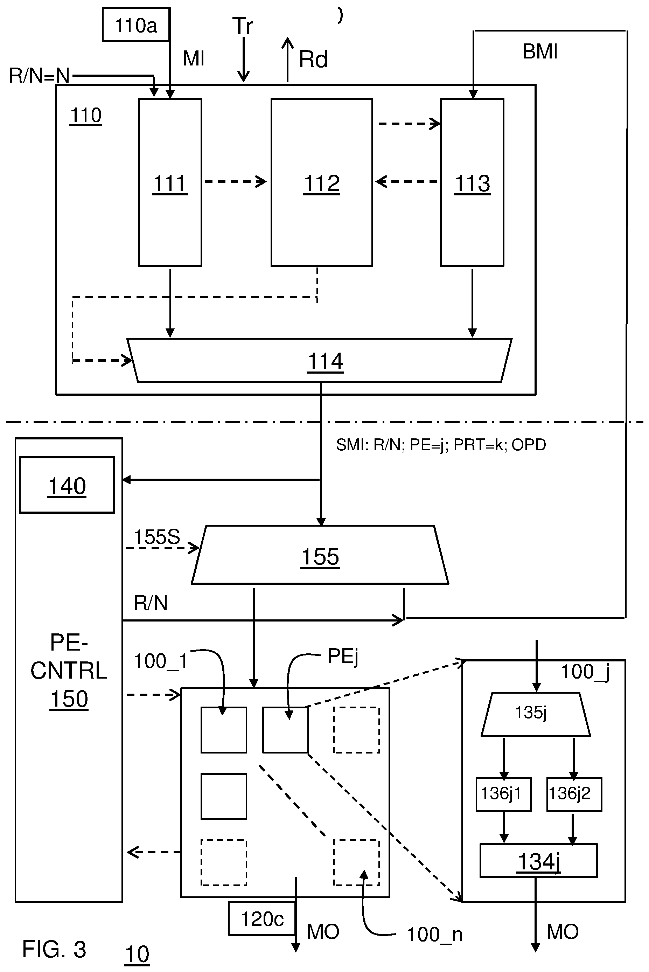

As shown in the examples in FIG. 2 and FIG. 3, the processing clusters 10 comprise a plurality (n) of processing cluster elements 100_1, ..., 100_j,..., 100_n.

The message-based processing system 1 also comprises one or more message queues to hold event-messages to be processed by the processing cluster elements 100_1, ..., 100_j,..., 100_n of the processing clusters 10. The one or more message queues 110, may be part of the processing clusters, as shown in FIGs. 2 and 3, but may alternatively be part of the network 20. Processing clusters may have a proper message output queue as shown in FIG. 2, to buffer outgoing messages which are not yet accepted by the network, but alternatively an output queue may be incorporated in a network interface node 21 of the processing cluster 10, or the processing cluster 10 may postpone processing until a message is accepted.

The processing synchronization hierarchy 3 comprises at least one main level synchronization controller 30, and two or more cluster level synchronization controllers 3000. In the example shown the processing synchronization hierarchy 3 comprises four cluster level synchronization controllers 3000a, 3000b, 3000c an 3000d. Also, in this example, the processing synchronization hierarchy 3 comprises two intermediate level synchronization controllers 300a, 300b.

The main level synchronization controller 30 is configurable in a main level operational mode Mm selected from at least a first potential main level operational mode Mm1 and a second potential main level operational mode Mm2. Therewith the main level synchronization controller 30 controls to which extent the processing clusters 10 are mutually synchronized in accordance with the selected operational mode. A host computer H may specify the operational mode Mm by writing into a synchronization control register 33 which may be incorporated in the main level synchronization controller 30..

Each cluster level synchronization controller 3000a, 3000b, 3000c, 3000d is configured in a proper cluster level operational mode in accordance with the selected potential main operational mode to issue a trigger signal to one or more of the processing clusters 10. The trigger signal Tr is an execution start signal which causes the recipient processing cluster(s) 10 to initiate execution of a sequence of processing cycles to process their received event messages. The recipient processing cluster(s) 10 are configured to issue a processing ready signal Rd to indicate the condition of an empty message queue 110.

In the embodiment shown, each cluster level synchronization controller 3000 controls a respective set of four clock-driven processing clusters 10. In particular cluster level synchronization controllers 3000a, 3000b, 3000c and 3000d respectively control a first set A, a second set B, a third set C and a fourth set D of clock-driven processing clusters 10. This implies that their trigger signal Tr simultaneously causes the processing clusters 10 in the controlled set to initiate execution. The cluster level synchronization controller 3000 receives a processing ready signal Rd from the set if all processing clusters 10 therein have finished processing. Alternatively, the number of clock-driven processing clusters 10 to be controlled by a cluster level synchronization controller 3000 may be different from four, e.g. a cluster level synchronization controllers 3000 may control exactly one or any other number of clock-driven processing clusters 10. Respective cluster level synchronization controllers 3000 may control mutually different numbers of clock-driven processing clusters 10.

In the embodiment shown, the processing synchronization hierarchy 3 further comprises intermediate level synchronization controllers 300a, 300b to enable the main level synchronization controller 30 to indirectly control one or more cluster level synchronization controllers 3000a, 3000b, 3000c, 3000d. As described elsewhere, this is particularly useful in a processing system 1 having a relatively large number of processing clusters.

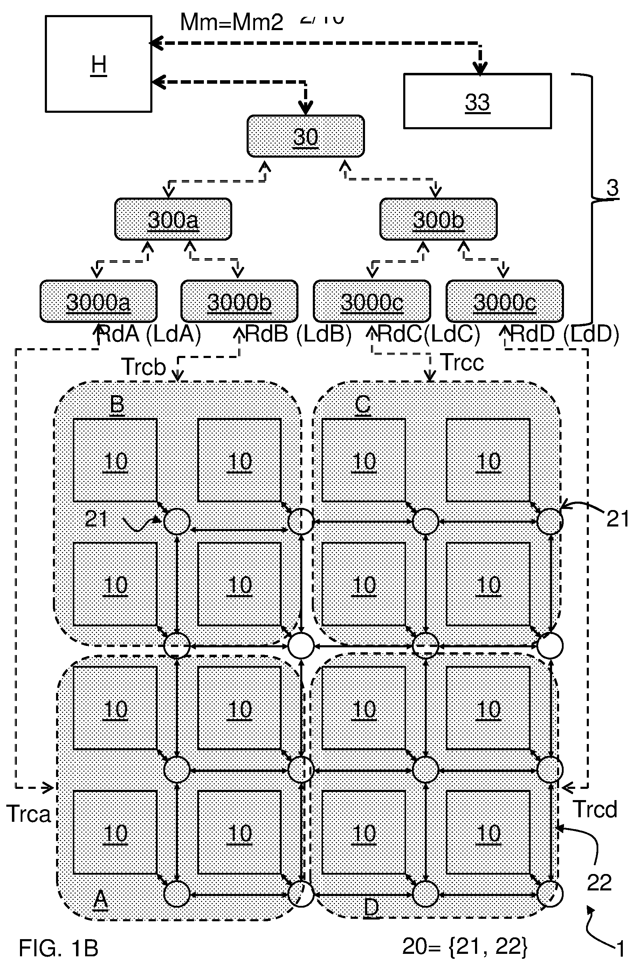

The processing synchronization hierarchy 3 provided in the improved message-based processing system allows a mix of different processing schemes allowing either groups of processing clusters to be mutually (coarsely) synchronized or allows one, more or all processing clusters to run independently. In the example shown in FIG. 1A, the host processor H has written control register 33 to configure the processing synchronization hierarchy 3 into the first main operational mode Mm = Mm1. Therein the main level synchronization controller 30 causes the two or more cluster level synchronization controllers 3000 to initiate a new sequence of processing cycles for all processing clusters at a same time. In its second operational mode Mm= Mm2, shown in FIG. 1B, the main level synchronization controller 30 allows cluster level synchronization controllers 3000 to independently initiate a new sequence of processing cycles in their respective controlled processing clusters.

The main level synchronization controller 30 may for example be configured in that in its first main operational mode Mm = Mm1 it initiates a sequence of processing cycles only if all processing clusters have issued a processing ready signal Rd. To that end the main level synchronization controller 30 in its first main operational mode may configure the cluster level synchronization controllers 3000 to issue its cluster lever trigger signal (e.g. Trca) in response to a higher level trigger signal, in this case the higher level trigger signal Trh originating from a host processor H. Alternatively the higher level trigger signal may be generated by the main level synchronization controller 30 itself. In the example of FIG. 1A this is illustrated in that the host H issues a supervisory trigger signal Trh, the main level synchronization controller 30 in response thereto issues main level trigger signals Trma, Trmb to the intermediate level synchronization controllers 300, and the intermediate level synchronization controllers 300 on their turn issue intermediate level trigger signals Tria, Trib, Tric, Trid to the cluster level synchronization controllers 3000a, 3000b, 3000c, 3000d respectively, which in response thereto respectively issue the trigger signals Trca, Trcb, Trcc, Trcd to initiates execution of the clock-driven processing clusters 10 in their respective controlled sets A, B, C, D.

Upon completion of execution, the clock-driven processing clusters 10. issue a processing ready signal Rd, e.g. RdA, RdB, RdC or RdB. This is the case if the message queue 110, which can be proper to the processing cluster or be part of the network 20 is empty. In the first operational mode, the cluster level synchronization controllers 3000 issue in response to the processing ready signal Rd (e.g. RdA) a cluster level processing ready signal (e.g. RdcA) to the intermediate level synchronization controller 300 (e.g. 300a). The latter is configured to issues an intermediate level processing ready signal (e.g.Rdia) to the main level synchronization controller 30. The main level synchronization controller 30 may then issue a new main level trigger signal (e.g.Trma, Trmb)) if it has received an intermediate level processing ready signal from each of the intermediate level synchronization controllers 300 under its control. Receipt of an intermediate level processing ready signal of a intermediate level synchronization controller 300 is not required if it is set in an autonomously operating mode. Likewise receipt of a cluster level processing ready signal of a particular cluster level synchronization controller as a condition to issue an intermediate level ready signal is not required if the particular cluster level synchronization controller is set in an autonomously operating mode

In an embodiment the main level synchronization controller 30 may issue a main level processing ready signal Rdm to the host and wait for a new supervisory level trigger signal Trh before it issues new main level trigger signals Trma, Trmb. As noted above, the intermediate level synchronization controllers 300 are provided as optional elements in the processing synchronization hierarchy 3. In an alternative arrangement the main level synchronization controller 30 may directly issue the trigger signals to the cluster level synchronization controllers 3000 and the latter may directly issue their processing ready signals to the main level synchronization controller 30.

FIG. 1B shows an example of the message-based processing system 1, wherein the processing synchronization hierarchy 3 is configured in the second operational mode Mm2, in which all cluster level synchronization controllers 3000 are configured to autonomously issue the cluster level trigger signal Trca, Trcb, Trcc, Trcd after having received a processing ready signal RdA, RdB, RdC, RdD from their respective set of processing clusters 10 under their control. In an embodiment a cluster level synchronization controller 3000 may be configured in that operational mode to directly issue the cluster level trigger signal, e.g. Trca after having received the processing ready signal e.g. RdA. Alternatively, one, more or all of the cluster level synchronization controllers 3000 may be provided with a local clock counter to provide for a delay. I.e. in that case the cluster level synchronization controllers 3000 may in response to a higher level trigger signal start to issue the cluster trigger signal with a predetermined repetition period, i.e. a predetermined number of cycles of its local clock counter cycles. The predetermined number of cycles may be specified in a respective register in the cluster level synchronization controller 3000. The latter may for example be written directly or indirectly (via an intermediate level synchronization controller 300) by the main level synchronization controller 30. Optionally, a maximum number of these repetitions may be specified, e.g. in another register in the cluster level synchronization controller 3000. Likewise the main level synchronization controller 30 may directly or indirectly specify the maximum number of repetitions by writing this other register.

In another autonomous mode, the cluster level synchronization controller 3000 also starts to repetitively issue the cluster level trigger signal. However, instead of issuing the cluster level trigger signal with a predetermined repetition period, each next cluster level trigger signal is issued upon receipt by the cluster level synchronization controllers 3000 of a ready signal from its associated processing clusters. Also in this operational mode, a maximum number of these repetitions may be specified, e.g. in a register in the cluster level synchronization controller 3000 the may be directly or indirectly accessible by the main level synchronization controller 30. Alternatively such register could be written by the host H.

In another example a processing cluster 10 may be configured to issue a load signal Ld to the cluster level synchronization controller 3000 indicative of the number of event-messages in its message queue 110. E.g. the load signal LdA indicates the load of the set A of processing clusters. The cluster level synchronization controller 3000 may further be configured in the second cluster level operational mode Mc2 to issue the trigger signal in response to detecting that the load signal indicates that the number of event-messages in a message queue of a processing cluster 10 under its control exceeds a predetermined minimum number. In that case a processing ready state may be indicated by the load signal, e.g. LdA as a load of 0, so that a separate ready signal, e.g. RdA is not necessary.

A processing cluster 10 may be configured to perform the following steps upon receipt of a cluster level trigger signal, e.g. TrcA for processing clusters in set A, regardless the operational mode of the processing synchronization hierarchy 3. Firstly, it determines whether its message queue 110 contains event messages to be processed and if this not the case it issues a processing ready signal to the cluster level synchronization controller 3000 from which it received the cluster level trigger signal If instead it determines that the message queue is not empty, it processes the event messages from the message queue. After each processed message, it may check the message queue and issues a processing ready signal when no messages remain.

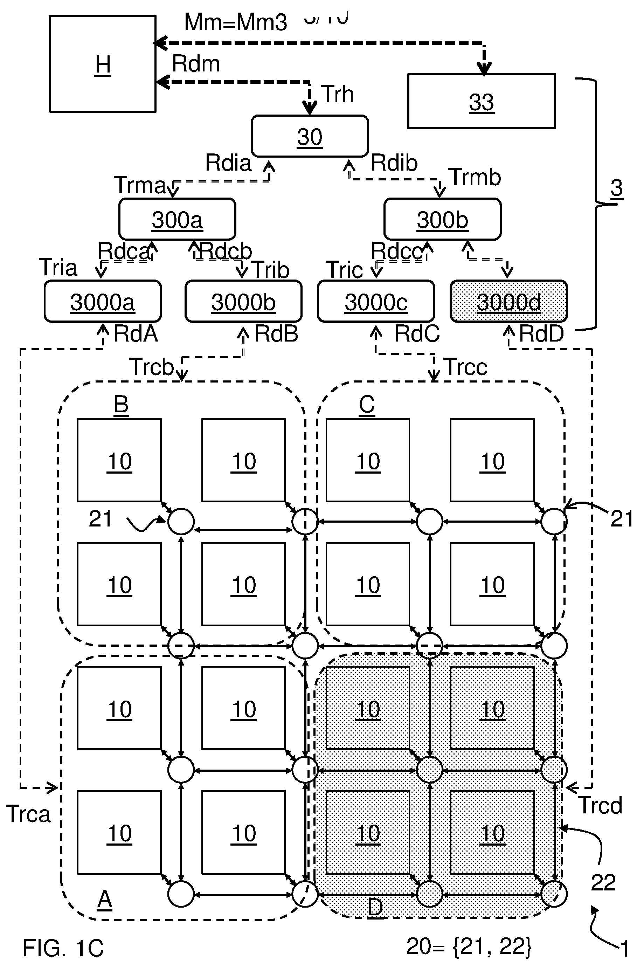

As noted, the processing synchronization hierarchy 3 may also allow for a mix of different processing schemes. In the example of FIG. 1C, the operational mode Mm of the synchronization hierarchy is a third operational mode Mm3. Therein one set of clock-driven processing clusters 10, here set D, is allowed to operate independently from the other sets A,B, C of processing clusters. Hence, the set D of clock-driven processing clusters 10 is allowed to be operated autonomously by its cluster level synchronization controller 3000d as specified in the description of FIG. 1B. The cluster level synchronization controller 3000d may for example have a first autonomous operational mode wherein it repetitively issues cluster level trigger signals Trcd, for example with a predetermined repetition period, or each time waiting for the ready signal RdD from its associated processing clusters. The cluster level synchronization controller 3000d may continue this repeating until it receives a new control signal or instruction from the main level synchronization controller 30, and/or it may autonomously discontinue repeating, for example after a predetermined maximum number of repetitions and/or after a predetermined number of clock-cycles. A predetermined maximum number of repetitions and/or after a predetermined number of clock-cycles may be specified for example by the main level synchronization controller 30 or the host H by writing a corresponding control register.. The other sets A,B, C of processing clusters are mutually synchronized as specified in the description of FIG. 1A..

In an embodiment one or more processing clusters 10 may be provided with a configurable breakpoint detection module. The breakpoint detection module may comprise a control register with which it can be configured to detect one or more conditions, for example including the condition that a message is directed to a predetermined processing cluster element in the clock-driven processing cluster, a particular arithmetic condition, an exception, an overflow condition. The processing cluster 10 is therewith configured to issue a breakpoint condition signal to its associated cluster level synchronization controller 3000 upon such detection. A cluster level synchronization controller 3000 receiving such breakpoint condition signal is configured to respond by stopping execution of the one or more processing clusters under its control, for example by not issuing a subsequent trigger signal, until it has received a further control signal. The cluster level controller may for example be configured to enable a manual start of a single sequence of processing cycles in one or more processing clusters in response to a corresponding command from a supervisory process executed by host H subsequent to receiving a breakpoint signal. The cluster level synchronization controller 3000 may be further configurable to pass a breakpoint condition signal to a hierarchically higher level synchronization controller, which in turn is configurable to instruct associated cluster level synchronization controllers to stop execution of the processing clusters 10 under their control.

As noted, and shown in FIG. 1A, 1B and 1C, the processing synchronization hierarchy 3 may further comprise intermediate level synchronization controllers 300 that enable the main level synchronization controller 30 to indirectly control one or more cluster level synchronization controllers 3000. The intermediate level synchronization controller 300 act as an intermediate information pass-on buffer between the main level synchronization controller 30 and their associated cluster level synchronization controllers 3000. Therewith synchronization control of groups of cluster level synchronization controllers 3000 is facilitated and the message-based processing system 1 can be more easily scaled for larger implementations. In the first operational mode M1, the intermediate level synchronization controller 300 may be configured to issue an aggregate processing ready signal to the main level synchronization controller 30 when all its associated clock-driven processing clusters 10 have finished processing. The intermediate level synchronization controller 300 may issue an aggregate processing ready signal, Rdia, Rdib upon having received the lower level processing ready signal Rdca, Rdcb, Rdcc, Rddd from all associated cluster level synchronization controllers 3000 operating in the first cluster level operational mode. Alternatively or additionally, an intermediate level synchronization controller 300 may be configured to analyse inter-cluster transfer of messages and to issue an aggregate processing ready signal to the main level synchronization controller 30 when this analysis reveals that there are no pending event messages. Therewith it ensures that processing clusters 10 when running in a common synchronization scheme do not move to a next synchronized operation as long as pending messages among these clusters exist.

A message-based processing system 1 as described herein may operate as follows. An operator directly or indirectly, e.g. via a host H selects an operational mode for the processing synchronization hierarchy 3 to control to which extent said processing clusters are mutually synchronized. At least a first and a second potential operational mode are available. The selection of the operational mode has the effect of configuring each cluster level synchronization controller 3000 in accordance with the selected potential main operational mode to issue a trigger signal (execution start signal) to its associated processing clusters 10 to achieve that they initiate execution of a sequence of processing cycles to process their received event messages. The processing clusters 10 on their turn issue a processing ready signal to indicate the condition of an empty message queue.

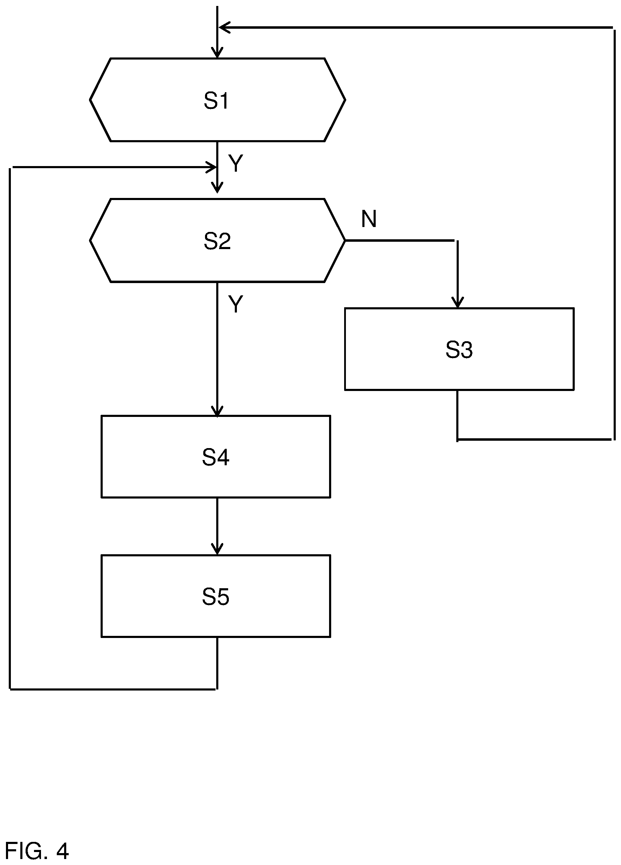

FIG. 2 shows an embodiment of a clock-driven processing cluster 10 having clock 140. The processing cluster 10 comprises a plurality (n) of processing cluster elements 100_1, ..., 100_j,..., 100_n. In this example, the clock-driven processing cluster 10 is a neuromorphic processing cluster and the processing cluster elements 100_1, ..., 100_j,..., 100_n are represented by their neuromorphic state stored in a respective entry in a memory 132. The neuromorphic state of the processing cluster elements 100_1, ..., 100_j,..., 100_n is updated in a time-multiplexed manner by a shared processing facility 134. The clock-driven processing cluster 10 has a proper message queues 110 to hold event-messages EVMin to be processed, which it receives from network interface 21. Upon detecting in step S1 (See FIG. 4) a trigger signal Tr, e.g. trigger signal Trca for a processing cluster in set A, the controller 150, being controlled by the clock 140 verifies in step S2 whether event-messages to be processed are available in the input queue 110. If this is not the case it indicates in step S3 with a processing ready signal Rd that its input queue 110 is empty. If the input queue is not empty, it starts to retrieve(S4) event-messages from its input queue 110. By way of example it fetches message EVMi,j from the queue 110, which originates from a processing cluster element i (which may be proper to the processing cluster 10, or to another processing cluster) and which is received for processing cluster element 100_j. The controller 150 controls the shared processing facility 134 to compute (S5) the new neuromorphic state $V_{j,n+1}$ for processing cluster elements 100_j based on the current neuromorphic state $V_{j,n+1}$ and the nature of the message EVMi,j. The act of updating the neuromorphic state of the processing cluster element 100_j may result in a creation of an output message EVMout, e.g. indicating a firing state of processing cluster element 100_j, which is entered into output queue 120 to be internally processed further or for transmission via the network to a processing cluster element in another clock-driven processing cluster. The controller 150 indicates with a processing ready signal Rd that its input queue 110 is empty. The controller 150 may also postpone issuing of a processing ready signal Rd until the output queue 120 is empty. An embodiment may be contemplated wherein the clock-driven processing cluster 10 is configured to perform arithmetical or logical operations instead of, or in addition to neuromorphic operations. In such a case an input message may convey an operand and an output message may convey a result of the mathematical or logical operation. In the embodiment shown in FIG. 2, the controller 150 is further configured to issue a first edge signal EI indicative for a number of event messages received from the network 20, and a second edge signal EO indicative for a number of event messages which it transmitted via the network. These signals can be processed further in order to facilitate synchronization control as is set out in more detail below.

FIG. 3 shows another example of a clock-driven processing cluster 10, which is described in more detail in European application 19186361.2 filed earlier by the same applicant. In this case the processing cluster elements 100_1, ..., 100_j,..., 100_n each have a proper processing facility. By way of example a processing element 100_j is shown, having a processor element 134j and ports 136j1, 136j2 to receive operands via a selection element 135j. A message input queue unit 110 is provided that receives input messages to be processed via input 110A. The message input queue unit 110 comprises a fresh queue 111, a backlog queue 113, a queue controller 112, and a selection element 114. The selection element, controlled by queue controller 112 provides a message SMI selected from one of the queues 111, 113 to be processed by a processing element of the processing cluster 10, e.g. processing cluster element 100_j. The message includes an operand OPD, indicates a specific processor element PE=j and a port PRT=k, as the designation for receiving the operand. A processor element controller 150 determines whether or not the message SMI can be accepted at this point in time and if this is not the case returns the message via selection element 155, controlled with selection signal 155S to the backlog queue 113. A reservation status R/N may be given to the message. If the message SMI is accepted the operand OPD is loaded in the proper port of the proper processing cluster element 100_j. If all required operands are available execution follows and an output message MO with the result is provided to port 120c.

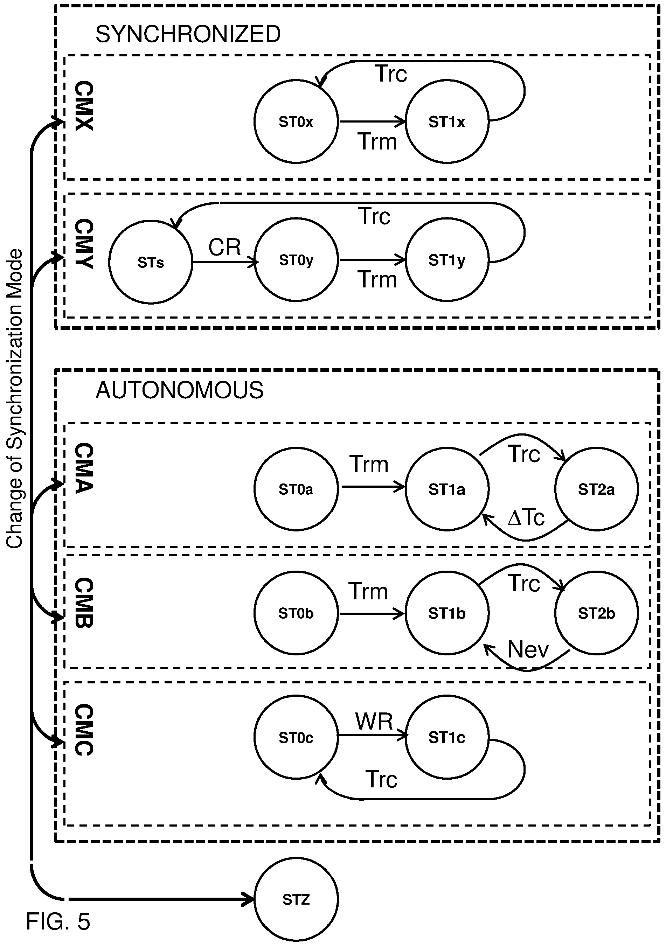

FIG. 5 provides an overview of operational states in various operational modes in an embodiment of the processing synchronization hierarchy 3. In this embodiment, the processing synchronization hierarchy 3 has two groups of operational modes, i.e. a first group of synchronous operational modes CMX, CMY and a second group of autonomous modes CMA, CMB, CMC. In the synchronous operational modes CMX, CMY, the main level synchronization controller 30 fully synchronizes operation of the clusters. The processing synchronization hierarchy 3 may have reference state STZ from which the operator, or a driver running on a host may select one of these operational modes, for example, by writing a corresponding mode indication into control register 33.

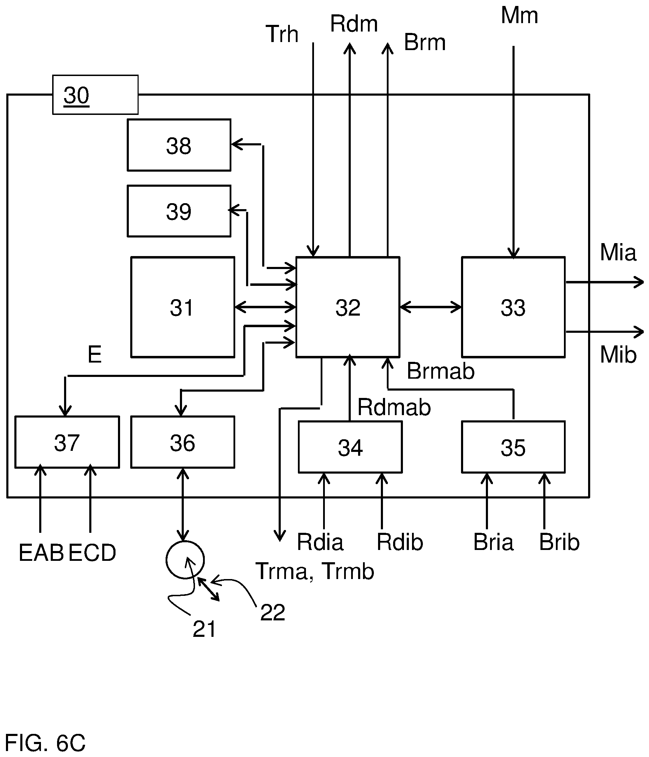

In the first synchronous operational mode, the main level synchronization controller 30S issues its main level trigger signal Trm after a fixed number of clock cycles have elapsed in wait state ST0x. In response thereto, the cluster level synchronization controllers 3000, in this case via the intermediate control of intermediate level synchronization controllers 300 issue their cluster level trigger signal Trc. The clusters start to process the events available in their event queues and generate local and/or remote events. The system state returns to ST0x, to wait for the next fixed number of clock-cycles. Hence in this first synchronous operational mode, the main level synchronization controller 30 will start the next sequence of processing cycles after a fixed number of clock cycles. The fixed number of clock cycles may be specified in a control register, for example control register 38 of the main controller (See FIG. 6C). Processing may continue until the processing synchronization hierarchy 3 is reset to reference state STZ. Alternatively, a number of repetitions may be specified, for example in control register 39 of the main level synchronization controller 30. In that case processing is discontinued after that preset amount of repetitions has been completed, or earlier, in case the operator resets the processing synchronization hierarchy 3 to state STZ before that predetermined amount of repetitions has been completed..

In this first synchronous operational mode CMX, the user must make sure that the fixed number of clock cycles between subsequent main level trigger signals Trm is chosen long enough to enable all clusters to finish their processing tasks within this time and that there are no pending events in the network 20. Since all clusters send a processing ready signal back to the main level synchronization controller 30 when they are finished, the system can detect a situation where one or more clusters have not finished their processing within the fixed number of clock cycles. The main level synchronization controller 30 may have a further register that contains the number of occasions that a processor cluster was not yet finished at the point in time a new main level trigger signal Trm was issued. This register may be reset automatically to 0 when the processing synchronization hierarchy 3 is reconfigured into another operational mode.

In the synchronous mode CMY, the main level synchronization controller 30 issues a main level trigger signal Trm for all clusters at the same time, just like in the first synchronous mode CMX, but the next period is started only when all clusters are done processing and no events messages are pending in the network anymore. This is indicated as the transition CR. This requires each cluster to signal when it has finished processing. A cluster indicates this by the signal Rd, e.g. RdA, RsB, RdC, RdD .On top of that, a pending message count facility may be provided to determine to determine the presence of pending messages and count their number. In this case the processing clusters 10 are configured to issue a first 'edge-active' signal, see for example EO (FIG. 2) that is indicative for a number of events transmitted by the cluster to the network 20. The processing clusters 10 are further configured to issue a second 'edge-active' signal, see for example EI (FIG. 2) that is indicative for a number of events received by the cluster from the network 20.

By counting all generated events on all clusters and subtracting this from the number of received events, it can be determined how many events are in flight on the NOC. The two edge-active' signals from all clusters may be routed to an aggregator that counts the incoming and outgoing NOC events for all clusters. This aggregator outputs a counter value to the main level controller that indicates the number of outstanding events. Note that these counters can have a negative value, so these must be a signed numbers. The functionality of counting the NOC events may also be distributed over the various components of the processing synchronization hierarchy 3, as is illustrated for subsequent embodiments. Starting and stopping the processing synchronization hierarchy 3 in mode CMY is the same as in mode CMX.

Autonomous operational mode CMA, CMB, CMC are provided as follows

In operational modes CMA, CMB, CMC the cluster level synchronization controllers 3000 autonomously determine at which point in time they initiate a new sequence of processing cycles in their associated clusters by control signal Trc.

In autonomous mode CMA, the next cluster level trigger signal Trc is issued when a predefined programmable timer ($\Delta$Tc) in the cluster has elapsed.

In autonomous mode CMB, the next cluster level trigger signal Trc is issued as soon as the event queue contains or exceeds a programmable number (Nev) of events.

In autonomous mode CMC, the next cluster level trigger signal Trc is issued when a cluster's local register is written with a specific control value.

In any of the autonomous modes, a new cluster level trigger signal Trc may still be issued in response to a higher level trigger signal Trm from the main level synchronization controller 30.

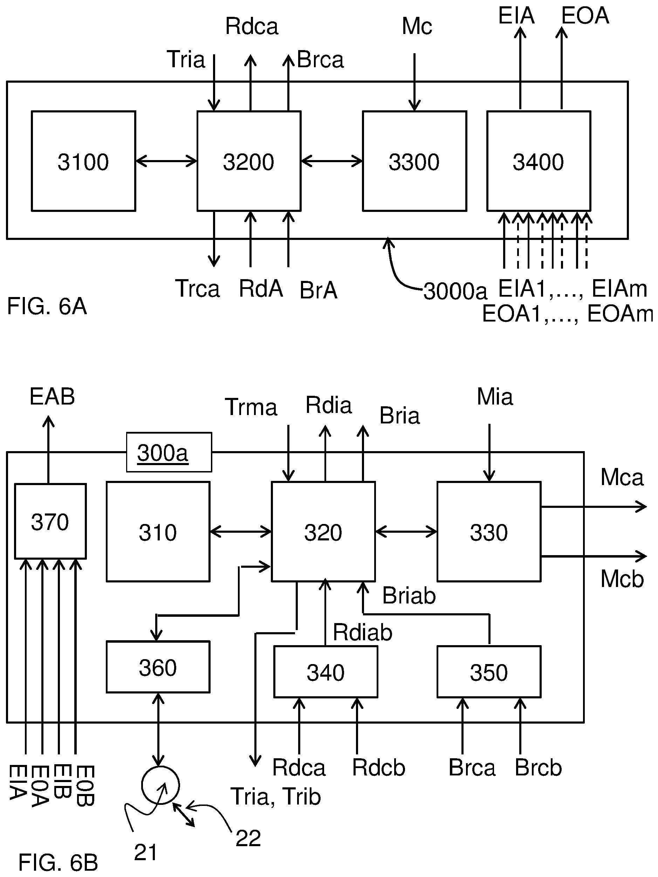

FIG. 6A schematically shows an example of cluster level synchronization controller 3000a having a sequencer 3200, a clock unit 3100 and a mode register 3300. In the embodiment shown, the cluster level cluster level synchronization controller 3000 receives input signals EIA1,...,EIAm, which are indicative for number of event-messages received by each of its associated m clusters, here four clusters. The cluster level cluster level synchronization controller 3000 also receives input signals EOA1,...,EOAm, which are indicative for number of event-messages transmitted by each of these associated clusters. In this embodiment, the cluster level synchronization controller 3000 has an aggregation element 3400 that aggregates the numbers indicative for received input messages and outputs a signal EIA indicative for this aggregated value. The aggregation element 3400 also aggregates the numbers indicative for transmitted messages and outputs a signal EOA indicative for this aggregated value.

It may also be the case that the cluster level synchronization controller 3000a receives a breakpoint signal BrA from a clock-driven processing cluster 10 in its associated set A, indicative that a special condition has occurred. The clock-driven processing cluster 10 may be configured to always issue a breakpoint signal in certain cases, e.g. a particular arithmetic condition such as a division by 0. Alternatively or additionally a clock-driven processing cluster 10 may be configurable, e.g. by a setting in a register, to issue a breakpoint condition signal Br in specific circumstances, such as the detection of a particular event message, e.g. an event-message having a specific origin and/or destination. In the embodiment shown the cluster level synchronization controllers 3000 in that case may transfer to an operational state wherein it waits for a continuation condition C, e.g. a new higher level trigger signal Tria. The cluster level synchronization controller 3000 in that case may also issue a higher level breakpoint condition signal Brca to a its associated higher level synchronization controller, e.g. intermediate level synchronization controller 300a or main level synchronization controller 30.

FIG. 6B, schematically shows an intermediate level synchronization controller 300a having a sequencer 320, a clock unit 310 and a mode register 330 the content of which determines the operational mode of the intermediate level synchronization controller 300 (intermediate level operational mode). The intermediate level synchronization controller 300 further comprises a ready signal handling element 340 and a break signal handling element 350. The mode register 330 can be used to configure the intermediate level synchronization controller 300 into a selected one of several potential intermediate level operational modes specified by input Mia from the main level synchronization controller 30.or from the host H. The intermediate level synchronization controller 300 can on its turn enforce a respective operational mode to each of its associated cluster level synchronization controllers 3000 (also denoted as cluster level operational mode). In the first mode Mm = Mm1 of operation of the processing synchronization hierarchy 3, the intermediate level synchronization controller 300 also assumes a first intermediate level operational mode Mi = Mi1, wherein it enforces with signals Mca=Mc1, Mcb=Mc1 each of its associated cluster level synchronization controllers 3000 to assume a respective first cluster level operational mode. This implies that all clock-driven processing clusters 10 are centrally synchronized by the main level synchronization controller 30, via the intermediate level synchronization controllers 300 and the cluster level synchronization controllers 3000. In the second mode Mm=Mm2 of operation of the processing synchronization hierarchy 3, the intermediate level synchronization controllers 300 also assume a second intermediate level operational mode Mi=Mi2, wherein it enforces with signals Mca = Mc2, Mcb=Mc2 each of its associated cluster level synchronization controllers 3000 to assume a respective second cluster level operational mode. This implies that all cluster level synchronization controllers 3000 are allowed to autonomously control their clock-driven processing clusters 10.

However, additional potential intermediate level operational modes are available, wherein the intermediate level synchronization controller 300 can enforce respective cluster level synchronization controllers 3000 into mutually different cluster level operational modes. For example, the intermediate level synchronization controller 300 in its third intermediate level operational mode may enforce one of its associated cluster level synchronization controllers 3000 with a signal Mca=Mc1 to assume a first cluster level operational mode and enforce another one of its associated cluster level synchronization controllers 3000 with a signal Mcb=Mc2 to assume a second cluster level operational mode. A fourth intermediate level operational mode may be provided to correspond with the opposite setting Mca = M2 and Mcb = M1.

The number of cluster level synchronization controllers 3000 is not limited to two. In other embodiments an intermediate level synchronization controller 300 may control a higher number of cluster level synchronization controllers 3000, and it may have a higher number of potential intermediate level operational modes from which its intermediate level operational mode can be selected, so that it enforces each of its associated cluster level synchronization controllers 3000 into a respective cluster level operational mode dependent on requirements.

In the embodiment shown, the intermediate level synchronization controller 300 also has a load analysis module 360, which is capable to determine a current load distribution of the associated clock-driven processing clusters 10 from an analysis of inter-cluster transfer of messages. With this information the sequencer 320 can determine whether an amendment of the load distribution is required. Upon determining that all associated clock-driven processing clusters 10 operating in the first cluster level operational mode are ready, the intermediate level synchronization controller 300 is configured to issue an aggregate processing ready signal Rdia to the main level synchronization controller 30. To that end, the ready signal handling element 340 may be configured to perform a logical function that generates a combined processing ready signal Rdiab which is True if and only if each of the cluster level synchronization controllers 3000 is either operating in the second cluster level operational mode, or has provided a processing ready signal. In the present example:

$$\text{Rdiab} = ((\text{Mca}=\text{M2}) \text{ OR } (\text{Rdca} = \text{True})) \text{ AND } ((\text{Mcb}=\text{M2}) \text{ OR } (\text{Rdcb} = \text{True}))$$

The break signal handling element 350 may a receive respective breakpoint signals Brca, Brcb from respective cluster level synchronization controllers 3000 and provide the sequencer 320 with a combined breakpoint signal Briab. The intermediate level synchronization controller 300 may be configured to respond to a breakpoint signal from a cluster level synchronization controller 3000, by stopping execution of the one or more processing clusters under its control and by not issuing a trigger signal Tria, Trib. In an alternative embodiment the sequencer 320 may have respective outputs to issue a respective trigger signal to each of its associated cluster level synchronization controllers 3000. The intermediate level synchronization controller 300 may be further configured or be configurable to pass a breakpoint condition signal Bria to a hierarchically higher level synchronization controller, e.g. the main level synchronization controller 30.

The intermediate level synchronization controller 300 shown in FIG. 6B also has an aggregator 370, that aggregates signal EIA, EOA from cluster level synchronization controller 3000a and corresponding signals EIB, EOB from cluster level synchronization controller 3000b into signal EAB, indicative for a number of pending events with its associated processing clusters 10.

FIG. 6C, schematically shows a main level synchronization controller 30 having a sequencer 32, a clock unit 31 and a mode register 33, the content of which determines the operational mode of the main level synchronization controller 30 (main level operational mode). The main level synchronization controller 30 further comprises a ready signal handling element 34 and a break signal handling element 35. The mode register 33 can be used to configure the main level synchronization controller 300 into a selected one of several potential main level operational modes, for example specified by input Mm from a host H. The main level synchronization controller 30 can on its turn enforce a respective intermediate level operational mode to each of its associated intermediate level synchronization controllers 300 (also denoted as intermediate level operational mode). In the first main level operational mode Mm=Mm1, determining the mode of operation of the processing synchronization hierarchy 3, the main level synchronization controller 30 enforces with signals Mia, Mib each of its associated intermediate level synchronization controllers 300 to assume a first intermediate level operational mode, and these consequently enforce each of their associated cluster level synchronization controllers 3000 to assume a respective first cluster level operational mode for a centrally synchronized operation of all clock-driven processing clusters 10. The main level synchronization controller 30 operating in the second mail level operational mode M2, enforces its associated intermediate level synchronization controller 300 to assume the second intermediate level operational mode, which consequently enforce each of their associated cluster level synchronization controllers 3000 to assume a respective second cluster level operational mode. Therewith all cluster level synchronization controllers 3000 will autonomously control their clock-driven processing clusters 10.

However, additional potential main level operational modes are available, wherein the main level synchronization controller 30 can enforce respective intermediate level synchronization controllers 300 into mutually different intermediate level operational modes. The main level synchronization controller 30 may for example have a further potential main level operational mode, wherein it enforces a first one of its intermediate level synchronization controllers 300 in a first intermediate level operational mode Mia = Mi1 and enforces a second one of its intermediate level synchronization controllers 300 in a second intermediate level operational mode Mib = Mi2. Therewith it is achieved that all cluster level synchronization controllers 3000 associated with that first one of the intermediate level synchronization controllers 300 operate according to the first cluster level operational mode, and that all cluster level synchronization controllers 3000 associated with that second one of the intermediate level synchronization controllers 300 operate according to the second cluster level operational mode. Still further potential main operational modes may be available that allow any combination of intermediate level operational modes, as specified above.

In the embodiment shown, the main level synchronization controller 30 also has a load analysis module 36, which is capable to determine a current load distribution of the associated clock-driven processing clusters 10 from an analysis of inter-cluster transfer of messages. With this information the sequencer 32 can determine whether an amendment of the load distribution is required. The main level synchronization controller 30 in the embodiment shown is configured to issue an aggregate processing ready signal Rdm to the host H upon determining that all associated clock-driven processing clusters 10 operating in the first cluster level operational mode are ready. To that end, the ready signal handling element 34 may be configured to perform a logical function that generates a combined processing ready signal Rdmab which is True if and only if each of its associated intermediate level synchronization controllers 300 is either operating in the second intermediate level operational mode, or has provided a processing ready signal. In the present example:

$$Rdmab = ((Mia=M2)\ OR\ (Rdia = True))\ AND\ ((Mib=M2)\ OR\ (Rdib = True))$$

The break signal handling element 35 may receive respective breakpoint signals Bria, Brib from respective intermediate level synchronization controllers 300 and provide the sequencer 32 with a combined breakpoint signal Brmab. The main level synchronization controller 30 may be configured to respond to a breakpoint signal from an intermediate level synchronization controller 300, by stopping execution of the one or more processing clusters under its control, for example by not issuing a trigger signal Trma, Trmb. In an alternative embodiment the sequencer 32 may have respective outputs to issue a respective trigger signal to each of its associated intermediate level synchronization controllers 300. The main level synchronization controller 30 may be further configured or be configurable to pass a breakpoint condition signal Brm to a host

Main level synchronization controller 30 receives signal EAB from intermediate level synchronization controller 300a, as well as a corresponding signal ECD from intermediate level synchronization controller 300b indicative for a respective number of pending events in their associated processing clusters 10. Therewith evaluation element 37 can determine how many events are in flight in the NOC 20.

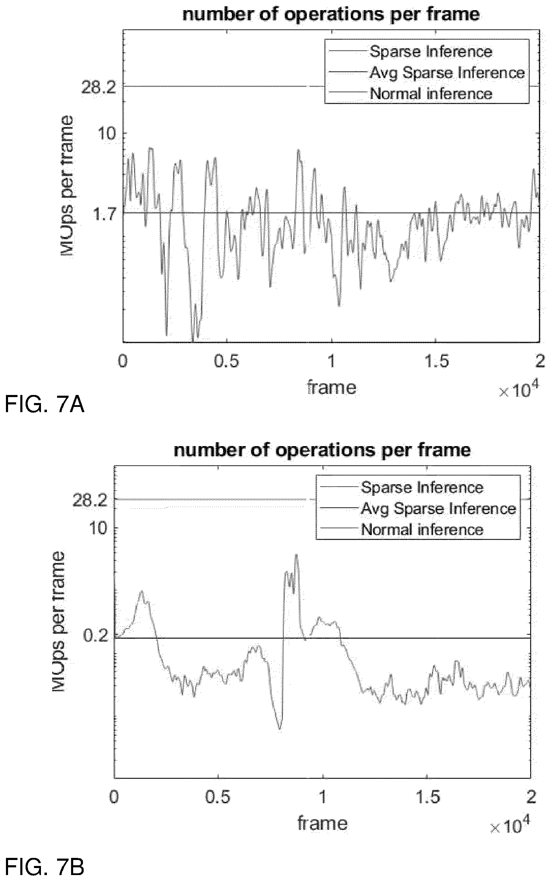

A message-based processing system 1 as provided herein is particularly suitable for sparse data applications. This is illustrated in FIG. 7A, 7B, showing two examples of a temporal load distribution involved in image processing. As becomes apparent therefrom, the processing load is generally substantially lower than a reference value, but strongly dependent on image content. The message-based processing system 1 as provided herein allows to dynamically set the processing configuration for optimally handling these type of data flows.

## Claims

1. A message-based processing system (1) comprising:

a plurality of clock-driven processing clusters (10), each processing cluster (10) comprising a plurality (n) of processing cluster elements (100_1, ..., 100_j,..., 100_n);
one or more message queues (110) to hold event messages to be processed by the processing cluster elements (100_1, ..., 100_j,..., 100_n) of the processing clusters (10);
a message exchange network (20, 21, 22) to enable processing cluster elements (100_1, ..., 100_j,..., 100_n) in the message-based processing system (1) to mutually exchange event messages;
a processing synchronization hierarchy (3) to control to which extent said processing clusters are mutually synchronized, the processing synchronization hierarchy (3) comprising at least one main level synchronization controller (30), and two or more cluster level synchronization controllers (3000);
each cluster level synchronization controller (3000) being configured to issue a trigger signal (Trca, Trcb, Trcc, Trcd) to at least one of said plurality of processing clusters (10) to achieve that the at least one of said plurality of processing clusters (10) initiates execution of a sequence of processing cycles to process said event messages, and
the at least one of said plurality of processing clusters (10) being configured to issue a processing ready signal to indicate a condition of an empty message queue (110),
**characterised in that**:

the processing synchronization hierarchy (3) is configurable in a main operational mode selected from at least a first potential main operational mode (Mm = Mm1) and a second potential main operational mode (Mm = Mm2), wherein the configuration of each cluster level synchronization controller (3000) to issue a trigger signal (Trca, Trcb, Trcc, Trcd) is in accordance with the selected main operational mode,

wherein the main level synchronization controller (30) in the first main operational mode (Mm = Mm1) of the processing synchronization hierarchy (3) causes the two or more cluster level synchronization controllers (3000) to initiate a new sequence of processing cycles for all processing clusters at a same time, and

wherein the main level synchronization controller (30) in the second main operational mode (Mm = Mm2) of the processing synchronization hierarchy (3) allows cluster level synchronization controllers (3000) to independently initiate a new sequence of processing cycles in their respective controlled processing clusters.

2. The message-based processing system (1) according to claim 1, wherein the processing cluster (10) is configured to issue a load signal to a cluster level synchronization controller (3000) by which it is controlled indicative of the number of event messages in its message queue (110).

3. The message-based processing system (1) according to claim 2, wherein the cluster level synchronization controller (3000), when the processing synchronization hierarchy (3) is configured in the second main operational mode (Mm = Mm2), is configured to issue the trigger signal (Trca, Trcb, Trcc, Trcd) in response to detecting that the load signal indicates that the number of event messages in a message queue of a processing cluster (10) under its control exceeds a predetermined minimum number.

4. The message-based processing system (1) according to any one of the preceding claims, wherein a processing cluster (10) is configured to perform the following steps upon receipt of a trigger signal (Trca, Trcb, Trcc, Trcd):

   determining whether its message queue (110) contains event messages to be processed and if this not the case, issuing a processing ready signal to the cluster level synchronization controller (3000);
   upon affirming that the message queue (110) is not empty, processing the event messages from the message queue.

5. The message-based processing system (1) according to any one of the preceding claims, wherein the processing cluster (10) is provided with a configurable breakpoint detection module to detect a breakpoint condition, the processing cluster (10) being configured to issue a breakpoint condition signal to its associated cluster level synchronization controller (3000) upon such detection.

6. The message-based processing system (1) according to claim 5, wherein a cluster level synchronization controller (3000) receiving said breakpoint condition signal is configured to respond by stopping execution of the one or more processing clusters (10) under its control and by not issuing a trigger signal (Trca, Trcb, Trcc, Trcd).

7. The message-based processing system (1) according to claim 6, wherein a cluster level synchronization controller is configured to enable a manual start of a single sequence of processing cycles in one or more processing clusters (10) in response to a corresponding command from a supervisory process subsequent to said receiving a breakpoint signal.

8. The message-based processing system (1) according to claim 6 or 7, wherein the cluster level synchronization controller (3000) is further configurable to pass a breakpoint condition signal to a hierarchically higher level synchronization controller, which hierarchically higher level synchronization controller is configurable to instruct associated cluster level synchronization controllers to stop execution of the processing clusters (10) under their control.

9. The message-based processing system (1) according to any one of the preceding claims, wherein the processing synchronization hierarchy (3) further comprises at least one intermediate level synchronization controller (300) that enables the main level synchronization controller (30) to indirectly control one or more cluster level synchronization controllers (3000).

10. The message-based processing system (1) according to claim 9, wherein the intermediate level synchronization controller (300) acts as an intermediate information pass-on buffer between said main level synchronization controller (30) and said cluster level synchronization controller (3000).

11. The message-based processing system (1) according to claim 9 or 10, wherein the intermediate level synchronization controller (300) is configured to analyze inter-cluster transfer of messages and to issue an aggregate processing ready signal to the main level synchronization controller (30) upon detecting that there are no pending event messages.

12. The message-based processing system (1) according to any one of the preceding claims, wherein the main level synchronization controller (30), in the first main operational mode (Mm = Mm1), initiates a sequence of processing cycles if all processing clusters have issued a processing ready signal.

13. The message-based processing system (1) according to any one of the preceding claims, wherein each cluster level synchronization controller (3000) is configured to issue the trigger signal (Trca, Trcb, Trcc, Trcd) in response to a higher level trigger signal originating from the main level synchronization controller (30) or from a host processor.

14. A method of operating a message-based processing system (1), the message-based processing system (1) comprising:

a plurality of clock-driven processing clusters (10), each processing cluster (10) comprising a plurality (n) of processing cluster elements (100_1, ..., 100_j,..., 100_n);
one or more message queues (110) to hold event messages to be processed by the processing cluster elements (100_1, ..., 100_j,..., 100_n) of the processing clusters (10);
a message exchange network (20, 21, 22) to enable processing cluster elements (100_1, ..., 100_j,..., 100_n) in the message-based processing system (1) to mutually exchange event messages;
a processing synchronization hierarchy (3) comprising at least one main level synchronization controller (30) and two or more cluster level synchronization controllers (3000);
the method comprising:

configuring each cluster level synchronization controller (3000) to issue a trigger signal (Trca, Trcb, Trcc, Trcd) to at least one of said plurality of processing clusters (10) to achieve that the at least one of said plurality of processing clusters (10) initiates execution of a sequence of processing cycles to process said event messages; and
configuring the at least one of said plurality of processing clusters (10) to issue a processing ready signal to indicate a condition of an empty message queue (110),
**characterized by**
configuring the processing synchronization hierarchy (3) in a main operational mode selected from at least a first potential main operational mode (Mm = Mm1) and a second potential main operational mode (Mm = Mm2) to control to which extent said processing clusters (10) are mutually synchronized in accordance with the selected main operational mode,
wherein the main level synchronization controller (30) in the first main operational mode (Mm = Mm1) of the processing synchronization hierarchy (3) causes the two or more cluster level synchronization controllers (3000) to initiate a new sequence of processing cycles for all processing clusters at a same time, and
wherein the main level synchronization controller (30) in the second main operational mode (Mm = Mm2) of the processing synchronization hierarchy (3) allows cluster level synchronization controllers (3000) to independently initiate a new sequence of processing cycles in their respective controlled processing clusters.

15. The method according to claim 14, wherein the processing synchronization hierarchy (3) allows a mix of different processing schemes allowing either groups of processing clusters to be mutually synchronized or allowing one, more or all processing clusters to run independently.

**Patentansprüche**

1. Nachrichtenbasiertes Verarbeitungssystem (1), umfassend:

eine Vielzahl von taktgesteuerten Verarbeitungsclustern (10), wobei jedes Verarbeitungscluster (10) eine Vielzahl (n) von Verarbeitungsclusterelementen (100_1, ..., 100_j, ..., 100_n) umfasst;
eine oder mehrere Nachrichtenwarteschlangen (110), um Ereignisnachrichten, die durch die Verarbeitungsclusterelemente (100_1, ..., 100_j, ..., 100_n) der Verarbeitungscluster (10) zu verarbeiten sind, zu halten;
ein Nachrichtenaustauschnetzwerk (20, 21, 22), um Verarbeitungsclusterelementen (100_1, ..., 100_j, ...,

100_n) in dem nachrichtenbasierten Verarbeitungssystem (1) zu ermöglichen, Ereignisnachrichten untereinander auszutauschen;

eine Verarbeitungssynchronisationshierarchie (3), um zu steuern, in welchem Ausmaß die Verarbeitungscluster untereinander synchronisiert werden, wobei die Verarbeitungssynchronisationshierarchie (3) mindestens eine Synchronisationssteuereinheit einer Hauptebene (30) und zwei oder mehr Synchronisationssteuereinheiten von Clusterebenen (3000) umfasst;

wobei jede Synchronisationssteuereinheit einer Clusterebene (3000) dazu konfiguriert ist, ein Auslösersignal (Trca, Trcb, Trcc, Trcd) an mindestens eines der Vielzahl von Verarbeitungsclustern (10) auszugeben, um zu erzielen, dass das mindestens eine der Vielzahl von Verarbeitungsclustern (10) eine Ausführung einer Sequenz von Verarbeitungszyklen initiiert, um die Ereignisnachrichten zu verarbeiten, und

das mindestens eine der Vielzahl von Verarbeitungsclustern (10) dazu konfiguriert ist, ein Verarbeitung-bereit-Signal auszugeben, um einen Zustand einer leeren Nachrichtenwarteschlange (110) anzugeben,

**dadurch gekennzeichnet, dass**:

die Verarbeitungssynchronisationshierarchie (3) in einem Hauptbetriebsmodus konfigurierbar ist, der aus mindestens einem ersten potenziellen Hauptbetriebsmodus (Mm = Mm1) und einem zweiten potenziellen Hauptbetriebsmodus (Mm = Mm2) ausgewählt ist, wobei die Konfiguration jeder Synchronisationssteuereinheit einer Clusterebene (3000), um ein Auslösersignal (Trca, Trcb, Trcc, Trcd) auszugeben, gemäß dem ausgewählten Hauptbetriebsmodus ist,

wobei die Synchronisationssteuereinheit einer Hauptebene (30) in dem ersten Hauptbetriebsmodus (Mm = Mm1) der Verarbeitungssynchronisationshierarchie (3) bewirkt, dass die zwei oder mehr Synchronisationssteuereinheiten von Clusterebenen (3000) eine neue Sequenz von Verarbeitungszyklen für alle Verarbeitungscluster gleichzeitig initiieren, und

wobei die Synchronisationssteuereinheit einer Hauptebene (30) in dem zweiten Hauptbetriebsmodus (Mm = Mm2) der Verarbeitungssynchronisationshierarchie (3) Synchronisationssteuereinheiten von Clusterebenen (3000) ermöglicht, eine neue Sequenz von Verarbeitungszyklen unabhängig in ihren jeweiligen gesteuerten Verarbeitungsclustern zu initiieren.

2. Nachrichtenbasiertes Verarbeitungssystem (1) nach Anspruch 1, wobei das Verarbeitungscluster (10) dazu konfiguriert ist, ein Ladesignal an eine Synchronisationssteuereinheit einer Clusterebene (3000) auszugeben, von der es gesteuert wird, das die Anzahl von Ereignisnachrichten in seiner Nachrichtenwarteschlange (110) angibt.

3. Nachrichtenbasiertes Verarbeitungssystem (1) nach Anspruch 2, wobei die Synchronisationssteuereinheit einer Clusterebene (3000), wenn die Verarbeitungssynchronisationshierarchie (3) in dem zweiten Hauptbetriebsmodus (Mm = Mm2) konfiguriert ist, dazu konfiguriert ist, das Auslösersignal (Trca, Trcb, Trcc, Trcd) als Reaktion auf ein Erkennen auszugeben, dass das Ladesignal angibt, dass die Anzahl von Ereignisnachrichten in einer Nachrichtenwarteschlange eines Verarbeitungsclusters (10) unter ihrer Steuerung eine vorbestimmte Mindestanzahl übersteigt.

4. Nachrichtenbasiertes Verarbeitungssystem (1) nach einem der vorhergehenden Ansprüche, wobei ein Verarbeitungscluster (10) dazu konfiguriert ist, die folgenden Schritte nach Empfang eines Auslösersignals (Trca, Trcb, Trcc, Trcd) durchzuführen:

Bestimmen, ob seine Nachrichtenwarteschlange (110) zu verarbeitende Ereignisnachrichten enthält, und wenn dies nicht der Fall ist, Ausgeben eines Verarbeitung-bereit-Signals an die Synchronisationssteuereinheit einer Clusterebene (3000);

nach Bestätigen, dass die Nachrichtenwarteschlange (110) nicht leer ist, Verarbeiten der Ereignisnachrichten aus der Nachrichtenwarteschlange.

5. Nachrichtenbasiertes Verarbeitungssystem (1) nach einem der vorhergehenden Ansprüche, wobei das Verarbeitungscluster (10) mit einem konfigurierbaren Breakpoint-Erkennungsmodul versehen ist, um eine Breakpoint-Bedingung zu erkennen, wobei das Verarbeitungscluster (10) dazu konfiguriert ist, nach einer derartigen Erkennung ein Breakpoint-Bedingungssignal an seine assoziierte Synchronisationssteuereinheit einer Clusterebene (3000) auszugeben.

6. Nachrichtenbasiertes Verarbeitungssystem (1) nach Anspruch 5, wobei eine Synchronisationssteuereinheit einer Clusterebene (3000), die das Breakpoint-Bedingungssignal empfängt, dazu konfiguriert ist, durch Stoppen einer Ausführung des einen oder der mehreren Verarbeitungscluster (10) unter ihrer Steuerung und durch Nicht-Ausgeben eines Auslösersignals (Trca, Trcb, Trcc, Trcd) zu reagieren.

7. Nachrichtenbasiertes Verarbeitungssystem (1) nach Anspruch 6, wobei eine Synchronisationssteuereinheit einer Clusterebene dazu konfiguriert ist, einen manuellen Start einer einzigen Sequenz von Verarbeitungszyklen in einem oder mehreren Verarbeitungsclustern (10) als Reaktion auf einen entsprechenden Befehl von einem Überwachungsvorgang anschließend an das Empfangen eines Breakpoint-Signals zu ermöglichen.

8. Nachrichtenbasiertes Verarbeitungssystem (1) nach Anspruch 6 oder 7, wobei die Synchronisationssteuereinheit einer Clusterebene (3000) ferner dazu konfigurierbar ist, um ein Breakpoint-Bedingungssignal zu einer Synchronisationssteuereinheit einer hierarchisch höheren Ebene zu leiten, wobei diese Synchronisationssteuereinheit einer hierarchisch höheren Ebene dazu konfigurierbar ist, assoziierte Synchronisationssteuereinheiten von Clusterebenen anzuweisen, eine Ausführung der Verarbeitungscluster (10) unter ihrer Steuerung zu stoppen.

9. Nachrichtenbasiertes Verarbeitungssystem (1) nach einem der vorhergehenden Ansprüche, wobei die Verarbeitungssynchronisationshierarchie (3) ferner mindestens Synchronisationssteuereinheit einer Zwischenebene (300) umfasst, die der Synchronisationssteuereinheit einer Hauptebene (30) ermöglicht, eine oder mehrere Synchronisationssteuereinheiten von Clusterebenen (3000) indirekt zu steuern.

10. Nachrichtenbasiertes Verarbeitungssystem (1) nach Anspruch 9, wobei die Synchronisationssteuereinheit einer Zwischenebene (300) als ein Zwischeninformationsweiterleitungspuffer zwischen der Synchronisationssteuereinheit einer Hauptebene (30) und der Synchronisationssteuereinheit einer Clusterebene (3000) agiert.

11. Nachrichtenbasiertes Verarbeitungssystem (1) nach Anspruch 9 oder 10, wobei die Synchronisationssteuereinheit einer Zwischenebene (300) dazu konfiguriert ist, einen Transfer von Nachrichten zwischen Clustern zu analysieren und nach Erkennen, dass keine ausstehenden Ereignisnachrichten vorliegen, ein aggregiertes Verarbeitung-bereit-Signal an die Synchronisationssteuereinheit einer Hauptebene (30) auszugeben.

12. Nachrichtenbasiertes Verarbeitungssystem (1) nach einem der vorhergehenden Ansprüche, wobei die Synchronisationssteuereinheit einer Hauptebene (30) in dem ersten Hauptbetriebsmodus (Mm = Mm1) eine Sequenz von Verarbeitungszyklen initiiert, wenn alle Verarbeitungscluster ein Verarbeitung-bereit-Signal ausgegeben haben.

13. Nachrichtenbasiertes Verarbeitungssystem (1) nach einem der vorhergehenden Ansprüche, wobei jede Synchronisationssteuereinheit einer Clusterebene (3000) dazu konfiguriert ist, das Auslösersignal (Trca, Trcb, Trcc, Trcd) als Reaktion auf ein Auslösersignal einer höheren Ebene, das von der Synchronisationssteuereinheit einer Hauptebene (30) oder von einem Host-Prozessor stammt, auszugeben.

14. Verfahren zum Betrieb eines nachrichtenbasierten Verarbeitungssystems (1), wobei das nachrichtenbasierte Verarbeitungssystem (1) umfasst:

eine Vielzahl von taktgesteuerten Verarbeitungsclustern (10), wobei jedes Verarbeitungscluster (10) eine Vielzahl (n) von Verarbeitungsclusterelementen (100_1, ..., 100_j, ..., 100_n) umfasst;
eine oder mehrere Nachrichtenwarteschlangen (110), um Ereignisnachrichten, die durch die Verarbeitungsclusterelemente (100_1, ..., 100_j, ..., 100_n) der Verarbeitungscluster (10) zu verarbeiten sind, zu halten;
ein Nachrichtenaustauschnetzwerk (20, 21, 22), um Verarbeitungsclusterelementen (100_1, ..., 100_j, ..., 100_n) in dem nachrichtenbasierten Verarbeitungssystem (1) zu ermöglichen, Ereignisnachrichten untereinander auszutauschen;
eine Verarbeitungssynchronisationshierarchie (3), die mindestens eine Synchronisationssteuereinheit einer Hauptebene (30) und zwei oder mehr Synchronisationssteuereinheiten von Clusterebenen (3000) umfasst;
wobei das Verfahren umfasst:
Konfigurieren jeder Synchronisationssteuereinheit einer Clusterebene (3000) dazu, ein Auslösersignal (Trca, Trcb, Trcc, Trcd) an mindestens eines der Vielzahl von Verarbeitungsclustern (10) auszugeben, um zu erzielen, dass das mindestens eine der Vielzahl von Verarbeitungsclustern (10) eine Ausführung einer Sequenz von Verarbeitungszyklen initiiert, um die Ereignisnachrichten zu verarbeiten, und
Konfigurieren des mindestens einen der Vielzahl von Verarbeitungsclustern (10) dazu, ein Verarbeitung-bereit-Signal auszugeben, um einen Zustand einer leeren Nachrichtenwarteschlange (110) anzugeben,

**gekennzeichnet durch**

Konfigurieren der Verarbeitungssynchronisationshierarchie (3) in einem Hauptbetriebsmodus, der aus mindestens einem ersten potenziellen Hauptbetriebsmodus (Mm = Mm1) und einem zweiten potenziellen Hauptbetriebsmodus (Mm = Mm2) ausgewählt ist, um zu steuern, in welchem Ausmaß die Verarbeitungscluster gemäß dem ausgewählten Hauptbetriebsmodus untereinander synchronisiert werden,

wobei die Synchronisationssteuereinheit einer Hauptebene (30) in dem ersten Hauptbetriebsmodus (Mm = Mm1) der Verarbeitungssynchronisationshierarchie (3) bewirkt, dass die zwei oder mehr Synchronisationssteuereinheiten von Clusterebenen (3000) eine neue Sequenz von Verarbeitungszyklen für alle Verarbeitungscluster gleichzeitig initiieren, und

wobei die Synchronisationssteuereinheit einer Hauptebene (30) in dem zweiten Hauptbetriebsmodus (Mm = Mm2) der Verarbeitungssynchronisationshierarchie (3) Synchronisationssteuereinheiten von Clusterebenen (3000) ermöglicht, eine neue Sequenz von Verarbeitungszyklen unabhängig in ihren jeweiligen gesteuerten Verarbeitungsclustern zu initiieren.

15. Verfahren nach Anspruch 14, wobei die Verarbeitungssynchronisationshierarchie (3) eine Mischung von unterschiedlichen Verarbeitungsschemata ermöglicht, die entweder Gruppen von Verarbeitungsclustern ermöglichen, untereinander synchronisiert zu werden, oder einem, mehreren oder allen Verarbeitungsclustern ermöglichen, unabhängig ausgeführt zu werden.

**Revendications**

1. Système de traitement basé sur des messages (1), comprenant :

une pluralité de grappes de traitement pilotées par horloge (10), chaque grappe de traitement (10) comprenant une pluralité (n) d'éléments de grappe de traitement (100_1, ..., 100_j, ..., 100_n);
une ou plusieurs files d'attente de messages (110) destinées à contenir des messages d'événement devant être traités par les éléments de grappe de traitement (100_1, ..., 100_j, ..., 100_n) des grappes de traitement (10) ;
un réseau d'échange de messages (20, 21, 22) destiné à permettre aux éléments de grappe de traitement (100_1, ..., 100_j, ..., 100_n) du système de traitement basé sur des messages (1) d'échanger mutuellement des messages d'événement ;
une hiérarchie de synchronisation de traitement (3) destinée à commander dans quelle mesure lesdites grappes de traitement sont mutuellement synchronisées, la hiérarchie de synchronisation de traitement (3) comprenant au moins un contrôleur de synchronisation de niveau principal (30) et deux contrôleurs de synchronisation de niveau grappe ou plus (3000) ;
chaque contrôleur de synchronisation de niveau grappe (3000) étant configuré pour émettre un signal de déclenchement (Trca, Trcb, Trcc, Trcd) à destination d'au moins une de ladite pluralité de grappes de traitement (10) afin d'obtenir que l'au moins une de ladite pluralité de grappes de traitement (10) initie l'exécution d'une séquence de cycles de traitement pour traiter lesdits messages d'événement, et
l'au moins une de ladite pluralité de grappes de traitement (10) étant configurée pour émettre un signal de disponibilité de traitement afin d'indiquer une condition d'une file d'attente de messages vide (110),

**caractérisé en ce que** :

la hiérarchie de synchronisation de traitement (3) est configurable dans un mode de fonctionnement principal sélectionné parmi au moins un premier mode de fonctionnement principal potentiel (Mm = Mm1) et un deuxième mode de fonctionnement principal potentiel (Mm = Mm2), dans lequel la configuration de chaque contrôleur de synchronisation de niveau grappe (3000) pour émettre un signal de déclenchement (Trca, Trcb, Trcc, Trcd) est conforme au mode de fonctionnement principal sélectionné,
dans lequel le contrôleur de synchronisation de niveau principal (30) dans le premier mode de fonctionnement principal (Mm = Mm1) de la hiérarchie de synchronisation de traitement (3) amène les deux contrôleurs de synchronisation de niveau grappe ou plus (3000) à initier une nouvelle séquence de cycles de traitement pour toutes les grappes de traitement simultanément, et
dans lequel le contrôleur de synchronisation de niveau principal (30) dans le deuxième mode de fonctionnement principal (Mm = Mm2) de la hiérarchie de synchronisation de traitement (3) permet aux contrôleurs de synchronisation de niveau grappe (3000) d'initier indépendamment une nouvelle séquence de cycles de traitement dans leurs grappes de traitement commandées respectives.

2. Système de traitement basé sur des messages (1) selon la revendication 1, dans lequel la grappe de traitement (10) est configurée pour émettre un signal de charge à destination d'un contrôleur de synchronisation de niveau grappe (3000) par lequel elle est commandée, indicatif du nombre de messages d'événement dans sa file d'attente de messages (110).

3. Système de traitement basé sur des messages (1) selon la revendication 2, dans lequel le contrôleur de synchronisation de niveau grappe (3000), lorsque la hiérarchie de synchronisation de traitement (3) est configurée dans le deuxième mode de fonctionnement principal (Mm = Mm2), est configuré pour émettre le signal de déclenchement (Trca, Trcb, Trcc, Trcd) en réponse à une détection que le signal de charge indique que le nombre de messages d'événement dans une file d'attente de messages d'une grappe de traitement (10) sous sa commande dépasse un nombre minimum prédéterminé.

4. Système de traitement basé sur des messages (1) selon l'une quelconque des revendications précédentes, dans lequel une grappe de traitement (10) est configurée pour effectuer les étapes suivantes, lors de la réception d'un signal de déclenchement (Trca, Trcb, Trcc, Trcd), comprenant le fait de :

déterminer si sa file d'attente de messages (110) contient des messages d'événement à traiter et, si ce n'est pas le cas, émettre un signal de disponibilité de traitement à destination du contrôleur de synchronisation de niveau grappe (3000) ;
après avoir affirmé que la file d'attente de messages (110) n'est pas vide, traiter les messages d'événement provenant de la file d'attente de messages.

5. Système de traitement basé sur des messages (1) selon l'une quelconque des revendications précédentes, dans lequel la grappe de traitement (10) est dotée d'un module de détection de point d'arrêt configurable destiné à détecter une condition de point d'arrêt, la grappe de traitement (10) étant configurée pour émettre un signal de condition de point d'arrêt à destination de son contrôleur de synchronisation de niveau grappe (3000) associé, lors d'une telle détection.

6. Système de traitement basé sur des messages (1) selon la revendication 5, dans lequel un contrôleur de synchronisation de niveau grappe (3000) recevant ledit signal de condition de point d'arrêt est configuré pour répondre en arrêtant l'exécution de la ou des grappes de traitement (10) sous sa commande et en n'émettant pas de signal de déclenchement (Trca, Trcb, Trcc, Trcd).

7. Système de traitement basé sur des messages (1) selon la revendication 6, dans lequel un contrôleur de synchronisation de niveau grappe est configuré pour permettre un démarrage manuel d'une unique séquence de cycles de traitement dans une ou plusieurs grappes de traitement (10) en réponse à une instruction correspondante provenant d'un processus de supervision subséquent à ladite réception d'un signal de condition de point d'arrêt.

8. Système de traitement basé sur des messages (1) selon la revendication 6 ou 7, dans lequel le contrôleur de synchronisation de niveau grappe (3000) est en outre configurable pour faire passer un signal de condition de point d'arrêt à un contrôleur de synchronisation de niveau hiérarchiquement supérieur, lequel contrôleur de synchronisation de niveau hiérarchiquement supérieur est configurable pour ordonner à des contrôleurs de synchronisation de niveau grappe associés d'arrêter l'exécution des grappes de traitement (10) sous leur commande.

9. Système de traitement basé sur des messages (1) selon l'une quelconque des revendications précédentes, dans lequel la hiérarchie de synchronisation de traitement (3) comprend en outre au moins un contrôleur de synchronisation de niveau intermédiaire (300) qui permet au contrôleur de synchronisation de niveau principal (30) de commander indirectement un ou plusieurs contrôleurs de synchronisation de niveau grappe (3000).

10. Système de traitement basé sur des messages (1) selon la revendication 9, dans lequel le contrôleur de synchronisation de niveau intermédiaire (300) agit comme un tampon de transmission d'informations intermédiaire entre ledit contrôleur de synchronisation de niveau principal (30) et ledit contrôleur de synchronisation de niveau grappe (3000).

11. Système de traitement basé sur des messages (1) selon la revendication 9 ou 10, dans lequel le contrôleur de synchronisation de niveau intermédiaire (300) est configuré pour analyser un transfert de messages entre grappes et pour émettre un signal de disponibilité de traitement agrégé à destination du contrôleur de synchronisation de niveau principal (30) lorsqu'il est détecté qu'il n'y a pas de messages d'événement en attente.

12. Système de traitement basé sur des messages (1) selon l'une quelconque des revendications précédentes, dans lequel le contrôleur de synchronisation de niveau principal (30), dans le premier mode de fonctionnement principal (Mm = Mm1), initie une séquence de cycles de traitement si toutes les grappes de traitement ont émis un signal de disponibilité de traitement.

**13.** Système de traitement basé sur des messages (1) selon l'une quelconque des revendications précédentes, dans lequel chaque contrôleur de synchronisation de niveau grappe (3000) est configuré pour émettre le signal de déclenchement (Trca, Trcb, Trcc, Trcd) en réponse à un signal de déclenchement de niveau supérieur provenant du contrôleur de synchronisation de niveau principal (30) ou d'un processeur hôte.

**14.** Procédé de fonctionnement d'un système de traitement basé sur des messages (1), le système de traitement basé sur des messages (1) comprenant :

une pluralité de grappes de traitement pilotées par horloge (10), chaque grappe de traitement (10) comprenant une pluralité (n) d'éléments de grappe de traitement (100_1, ..., 100_j, ..., 100_n);
une ou plusieurs files d'attente de messages (110) destinées à contenir des messages d'événement devant être traités par les éléments de grappe de traitement (100_1, ..., 100_j, ..., 100_n) des grappes de traitement (10) ;
un réseau d'échange de messages (20, 21, 22) destiné à permettre à des éléments de grappe de traitement (100_1, ..., 100_j, ..., 100_n) dans le système de traitement basé sur des messages (1) d'échanger mutuellement des messages d'événement ;
une hiérarchie de synchronisation de traitement (3) comprenant au moins un contrôleur de synchronisation de niveau principal (30) et deux contrôleurs de synchronisation de niveau grappe ou plus (3000) ;
le procédé comprenant le fait de :

configurer chaque contrôleur de synchronisation de niveau grappe (3000) pour émettre un signal de déclenchement (Trca, Trcb, Trcc, Trcd) à destination d'au moins une de ladite pluralité de grappes de traitement (10) afin d'obtenir que l'au moins une de ladite pluralité de grappes de traitement (10) initie l'exécution d'une séquence de cycles de traitement pour traiter lesdits messages d'événement ; et
configurer l'au moins une de ladite pluralité de grappes de traitement (10) pour émettre un signal de disponibilité de traitement afin d'indiquer une condition d'une file d'attente de messages vide (110),
**caractérisé par** le fait de
configurer la hiérarchie de synchronisation de traitement (3) dans un mode de fonctionnement principal sélectionné parmi au moins un premier mode de fonctionnement principal potentiel (Mm = Mm1) et un deuxième mode de fonctionnement principal potentiel (Mm = Mm2) pour commander dans quelle mesure lesdites grappes de traitement (10) sont mutuellement synchronisées conformément au mode de fonctionnement principal sélectionné,
dans lequel le contrôleur de synchronisation de niveau principal (30) dans le premier mode de fonctionnement principal (Mm = Mm1) de la hiérarchie de synchronisation de traitement (3) amène les deux contrôleurs de synchronisation de niveau grappe ou plus (3000) à initier une nouvelle séquence de cycles de traitement pour toutes les grappes de traitement simultanément, et
dans lequel le contrôleur de synchronisation de niveau principal (30) dans le deuxième mode de fonctionnement principal (Mm = Mm2) de la hiérarchie de synchronisation de traitement (3) permet à des contrôleurs de synchronisation de niveau grappe (3000) d'initier indépendamment une nouvelle séquence de cycles de traitement dans leurs grappes de traitement commandées respectives.

**15.** Procédé selon la revendication 14, dans lequel la hiérarchie de synchronisation de traitement (3) permet un mélange de différents schémas de traitement permettant soit à des groupes de grappes de traitement d'être mutuellement synchronisés, soit à une, plusieurs ou toutes les grappes de traitement de s'exécuter indépendamment.

FIG. 1A

$20 = \{21, 22\}$

FIG. 1B                    20= {21, 22}

FIG. 1C

20= {21, 22}

Tr   Rd   EI   E0

$V_{j,n+1}$

150                    140

110    EVMi,j    132    100_1
$V_{j,n}$

134    Fj    120

100_j

100_n

EVMin              EVMout

21

FIG. 2

22

FIG. 3    10

FIG. 4

FIG. 5

FIG. 6A

FIG. 6B

FIG. 6C

FIG. 7A

FIG. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016224502 A
- EP 19186361